# EUROPÄISCHE PATENTSCHRIFT

(11) **EP 3 435 344 B1**
(45) Veröffentlichungstag und Bekanntmachung des Hinweises auf die Patenterteilung: **17.02.2021**
(21) Anmeldenummer: 18183094.4
(22) Anmeldetag: 12.07.2018
(51) Int. Cl.: G08B 13/196, G08B 25/08, G08B 25/10, G08B 25/14, G08B 29/18, G05D 1/02

(54) **SELBSTTÄTIG IM AUSSENBEREICH VERFAHRBARES GERÄT MIT EINEM ÜBERWACHUNGSMODUL**
DEVICE WHICH CAN BE BE MOVED AUTOMATICALLY IN AN OUTDOOR AREA WITH A MONITORING MODULE
APPAREIL POUVANT ÊTRE AUTONOME DANS UNE ZONE EXTÉRIEURE DOTÉ D'UN MODULE DE SURVEILLANCE

(30) Priorität: 24.07.2017 DE 102017116658
(43) Veröffentlichungstag der Anmeldung: 30.01.2019
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- WO-A1-2016/133320
- WO-A2-2016/180796
- WO-A2-2016/186933
- US-A1- 2002 156 556

## Beschreibung

### Gebiet der Technik

Die Erfindung betrifft ein System, bestehend aus einem mit Hilfe eines von einer Steuereinrichtung unter Verwendung einer Sensorik berührungsfrei gewonnenen Steuerdaten und ggf. einer in einem Speicherelement gespeicherten Kartografie gesteuerten Fahrwerks selbsttätig im Außenbereich verfahrbaren ersten Fahrzeug und mit einer Überwachungssensoren aufweisenden Überwachungseinrichtung.

Die Erfindung betrifft darüber hinaus ein Verfahren zum Betrieb eines autark verfahrbaren Fahrzeuges im Außenbereich.

### Stand der Technik

Autarke, mit Hilfe eines von einer Steuereinrichtung unter Verwendung von einer Sensorik gewonnen Steuerdaten und ggf. einer in einem Speicherelement gespeicherten Kartografie gesteuerten Fahrwerks selbsttätig im Außenbereich verfahrbare Fahrzeuge sind bspw. als Mähroboter bekannt, die in der Lage sind, automatisch eine Rasenfläche zu mähen.

Aus der EP 2 423 893 B1 ist ein selbsttätig verfahrbares Gerät zur Reinigung eines Bodens bekannt. Der dort beschriebene Kehrroboter besitzt eine Sensorik zur Erfassung von Gegenständen seiner Umgebung. In dem Gerät ist eine Kartografie hinterlegt, mit der sich das Gerät im Innenbereich orientieren kann, um Reinigungsaufgaben vorzunehmen. Das Gerät weist darüber hinaus ein Überwachungsmodul auf, welches mittels Sensoren den Umgebungsbereich beobachten kann, um das unbefugte Eindringen in ein Gebäude zu detektieren. Das Gerät steht zudem in Wirkverbindung mit anderen Geräten.

Aus der DE 10 2015 111392 A1 ist ein Verfahren zum Betrieb eines Flächenbearbeitungsgerätes bekannt, welches mit einem Ultraschallsensor Glasbruchgeräusche detektiert und ebenfalls in der Lage ist, bei einem Einbruch einen Alarm abzugeben.

Des Weiteren ist im Stand der Technik aus der US 2002/0156556 A1 ein multifunktionaler Roboter mit einer Aufnahme für unterschiedliche Arbeitsmodule bekannt, die beispielsweise für Arbeitsaufgaben wie Mähen, Polieren oder Wachsen ausgebildet sind. Daneben weist der Roboter Überwachungseinrichtungen auf, die interne Zustände des Roboters überwachen können, beispielsweise einen Batterieladezustand oder ein wiederholtes Überfahren einer bereits bearbeiteten Fläche durch den Roboter.

Die WO 2016/180796 A2 betrifft ein selbsttätig verfahrbares Reinigungsgerät, welches zusätzlich zu dem Ausführen einer Reinigungsaufgabe ausgebildet ist, Informationen von einem Brandsensor zu empfangen und im Falle eines Brandalarms einen Notruf zu veranlassen bzw. einer in den Räumen anwesenden Person aktive Hilfe zum Verlassen der Räumlichkeiten zu bieten. Darüber hinaus kann das Reinigungsgerät Informationen von einer Einbruchmeldeanlage empfangen und im Falle eines Einbruchs einen Alarm ausgeben.

Aus der WO 2016/186933 A2 ist ein autonomer modularer Roboter mit unterschiedlichen Arbeitsmodulen bekannt, die gegeneinander ausgetauscht werden können. Die WO 2016/133320 A1 offenbart einen Reinigungsroboter mit einer Detektionseinrichtung zum Detektieren von Umgebungsparametern, wie beispielsweise Temperatur, Feuchtigkeit, Luftdruck und dergleichen, sowie einer Kommunikationseinrichtung zum Übermitteln und Empfangen von Daten an bzw. von einer externen Einrichtung, die beispielsweise eine Klimaanlage, Fenstersteuerung oder ähnliches sein kann.

### Zusammenfassung der Erfindung

Der Erfindung, definiert durch die Ansprüche, liegt die Aufgabe zugrunde, ein im Außenbereich selbsttätig verfahrbares Fahrzeug gebrauchsvorteilhaft weiterzubilden.

Bei dem erfindungsgemäßen Fahrzeug handelt es sich um ein Arbeitsgerät, welches für den autonomen Einsatz im Außenbereich ausgestattet ist. Ein derartiges autonomes Outdoor-Gerät wird erfindungsgemäß dadurch weitergebildet, dass es mit einem Überwachungsmodul ausgestattet ist. Das Fahrzeug kann mit dem Überwachungsmodul Überwachungsfahrten in einem Gelände vornehmen, um Umgebungsdaten zu sammeln, die in einem Speicher abgespeichert werden. Hierzu besitzt das Überwachungsmodul Überwachungssensoren, die berührungsfrei, aber auch berührend arbeiten können. Die Überwachungssensoren können Ultraschallsensoren, Mikrofone, bildgebende Sensoren, insbesondere Kameras sein. Die Sensoren können aber auch Lichtsensoren sein. Die Sensoren können eine Vorrichtung zur Bilderfassung im sichtbaren Licht oder zur Bilderfassung im infraroten aufweisen, also auch eine Wärmebildkamera. Ferner kann das Überwachungsmodul einen Scheinwerfer aufweisen, der in eine vorgegebene Richtung Licht ausstrahlen kann. Es kann auch eine Signalbeleuchtung aufweisen sowie akustische Signalgeber besitzen. Mit der Überwachungssensorik ist das Gerät in der Lage, innerhalb seines Aktionsraumes auf einem zu überwachenden Gelände Umgebungsmerkmale zu erfassen. Mittels Abstandssensoren kann eine Ortsverlagerung eines Gegenstandes oder einer Person im Gelände festgestellt werden. Das Gerät sammelt bei Überwachungsfahrten Daten über die Positionen von Objekten im Überwachungsbereich. Die Überwachungsfahrten werden mittels der Navigationssensorik und einer in einem Speicherelement gespeicherten Kartografie durchgeführt. Mittels der Überwachungssensorik, die dem Überwachungsmodul zugeordnet ist, nimmt das Überwachungsmodul bei jeder Überwachungsfahrt Daten, insbesondere Positionsdaten von Objekten im Überwachungsbereich auf und speichert ihre Position und Gestaltungsangaben ab. Dies kann im Zusammenspiel mit einem bildgebenden Sensor, bspw. mit einer Kamera, erfolgen. Mittels einer Bildauswertung eines aus verschiedenen Perspektiven aufgenommenen Objektes kann ein 3D-Modell des Objektes gebildet sein. Objekte, deren Position und Gestalt sich im Zuge mehrerer Überwachungsfahrten nicht ändern, können als ortsfeste Objekte im Speicher des Überwachungsmoduls abgelegt werden. Objekte, deren Größe sich ändert, deren Position aber konstant bleibt, können ebenfalls als ortsfeste Objekte, bspw. als Pflanze charakterisiert werden, deren Umrissgestalt und damit Größe sich zufolge einer Windbewegung ändern. Objekte, deren Position sich ändert, können als Tiere oder Menschen erkannt werden. Je nach Größe des beweglichen Objektes kann das Objekt als Eindringling erkannt werden. Wird ein derartiges Objekt erkannt, so wird von dem Überwachungsmodul ein Alarm ausgelöst, der über eine insbesondere drahtlose Kommunikationseinrichtung an ein Basismodul oder an eine Alarmzentrale weitergeleitet wird. Die Weitergabe eines Alarms oder Überwachungsdaten können auch über das Internet erfolgen, bspw. als E-Mail oder über das Mobilfunknetz via SMS. Anstelle einer Speicherung der auf der Überwachungsfahrt gewonnenen Daten im Überwachungsmodul können diese Daten aber auch extern gespeichert werden, bspw. in einer Alarmzentrale in einem Gebäude.

Bei dem Überwachungsmodul handelt es sich um ein Gerät, mit dem das Fahrzeug wahlweise bestückt werden kann. Gemäß einer bevorzugten Ausgestaltung der Erfindung ist das Fahrzeug ein autonomes Pflanzenpflegegerät, insbesondere ein Gartenbearbeitungsgerät. Das Gerät besitzt einen Modulträger. Mit Hilfe dieses Modulträgers kann das Gerät mit voneinander verschiedenen Arbeitsmodulen bestückt werden. Der Modulträger und das von ihm getragene Modul sind mechanisch mittels mechanischer Haltemittel und elektrisch mittels einer Steckverbindung miteinander verbunden. Über die Steckverbindung kann eine Stromversorgung, aber auch eine Datenkommunikation erfolgen. Es ist von Vorteil, wenn das Gerät wahlweise mit einem Arbeitsmodul oder mit einem Überwachungsmodul bestückt werden kann. Das Arbeitsmodul besitzt ein Werkzeug, mit dem eine Pflanzenpflegetätigkeit oder eine Gartenbearbeitung durchgeführt werden kann. So kann ein Schnittmodul bspw. ein Schneidwerkzeug, ein Mähmodul bspw. ein Mähwerkzeug und ein Bewässerungsmodul bspw. ein Bewässerungswerkzeug aufweisen. Während des Tages oder zu bestimmten Tageszeiten kann das Gerät in einem Arbeitszeitraum als Outdoor-Bearbeitungsgerät arbeiten, indem es ihm zugewiesene Arbeits- bzw. Pflegeaufgaben mit Hilfe der Arbeitsmodule durchführt. Die Arbeitsmodule und das Überwachungsmodul können an einem zentralen Ort bevorratet werden. Es kann sich um denselben Ort handeln, an dem eine Basisstation des Fahrzeuges angeordnet ist. Bevorzugt handelt es sich um eine überdachte Vorrichtung, bspw. einen Schuppen. In einer Zeit, in der das Fahrzeug nicht gartenbearbeitend tätig ist, kann es durch Austausch eines Arbeitsmoduls gegen ein Überwachungsmodul als Überwachungsgerät verwendet werden. Mit den Überwachungssensoren wird dann auf Überwachungsfahrten eine Änderung der Umgebung innerhalb des zu überwachenden Geländes analysiert und als Alarm ausgewertet, wenn es Alarmkriterien erfüllt. Mit dem Überwachungsmodul kann ein Outdoor-Gerät als Überwachungsgerät weitergebildet werden. Hierzu wird die Funktionalität des Gerätes um optionale Sensoren und Aktoren, bspw. berührungsempfindliche Sensoren, für eine Überwachungstätigkeit erweitert. Das Überwachungsmodul ist bevorzugt nur für Überwachungsphasen, bspw. Nachtstunden oder Tagstunden, wenn das Gelände ansonsten nicht überwacht wird, montiert. Die Montage des Überwachungsmoduls am Fahrzeug kann manuell durch den Benutzer oder aber auch automatisiert an der Basisstation erfolgen. Je nach Baugröße des Überwachungsmoduls kann dieses aber auch permanent am Fahrzeug befestigt sein. Es ist ferner vorgesehen, dass das Fahrzeug bzw. das Überwachungsmodul bei einer Überwachungsfahrt Informationen, die als sicherheitsrelevant eingeordnet werden, an ein hausinternes Sicherheitssystem übermittelt. Die Übermittlung kann aber auch an ein im Innenbereich mit Sicherungsaufgaben betrautes autonomes Gerät erfolgen. Bei diesem im Innenbereich arbeitenden Gerät kann es sich bspw. um ein Flächenbearbeitungsgerät handeln, welches zusätzlich eine Überwachungstätigkeit verrichtet. Es ist ferner vorgesehen, dass das autonome Außengerät mit dem autonomen Innengerät oder mit einem stationären Innengerät in einem Datenaustausch steht, so dass Daten über sich im Außenbereich bewegende Objekte insbesondere über die Gestalt der Objekte an das im Innenraum arbeitende Gerät weitergeleitet werden, so dass das im Innenraum arbeitende Gerät das Objekt identifizieren kann, wenn es in den Erfassungsbereich des im Innenraum arbeitenden Überwachungsgerätes kommt. Mit dem erfindungsgemäßen Überwachungsmodul ist das Fahrzeug in der Lage, sich im Überwachungsgelände bewegende Personen zu ermitteln und insbesondere in der Lage, die aktuelle Position der Person an eine Alarmzentrale oder an ein im Innenraum arbeitendes Gerät zu übermitteln. Das im Innenraum arbeitende Gerät wird somit informiert, an welcher Position sich ein derartig bewegendes Objekt dem Gebäude nähert. Es kann sich dann in eine Position bringen, um von der Innenseite diesen Ort zu überwachen.

### Kurze Beschreibung der Zeichnungen

Ein Ausführungsbeispiel der Erfindung wird nachfolgend anhand beigefügter Zeichnungen erläutert. Es zeigen:
- Fig. 1: schematisch ein als Arbeitsgerät ausgebildetes erfindungsgemäßes Outdoor-Gerät im Außeneinsatz,

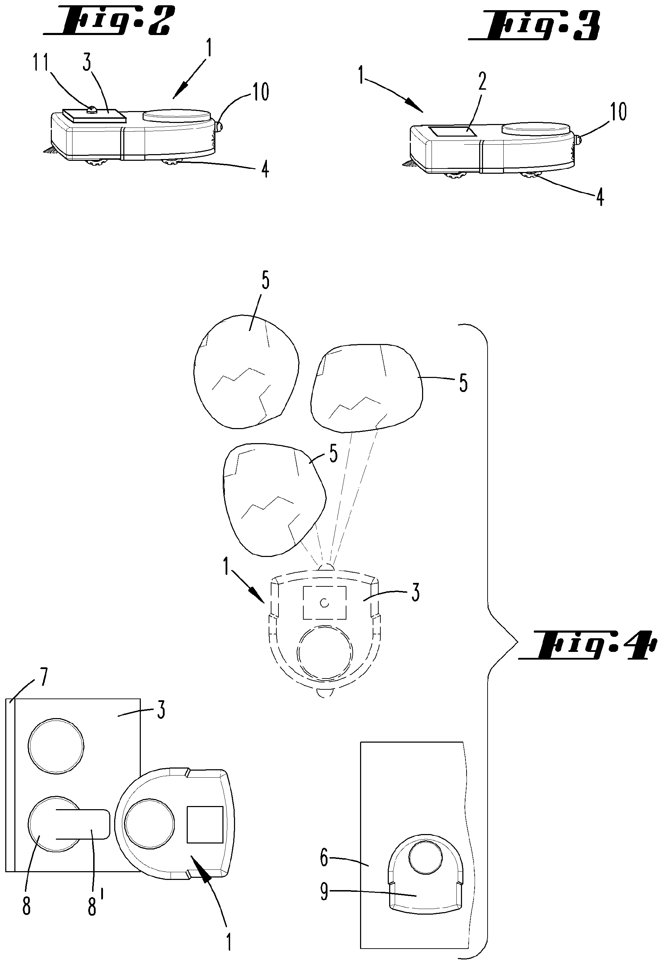

- Fig. 2: schematisch und perspektivisch das Außengerät mit einem Überwachungsmodul 3,
- Fig. 3: das Fahrzeug 1 ohne auf einem Modulträger 2 aufgesetztes Modul,
- Fig. 4: die Draufsicht auf ein zu überwachendes Gelände mit einer Basisstation 7, Pflanzen 5 und einem Gebäude 6.

### Beschreibung der Ausführungsformen

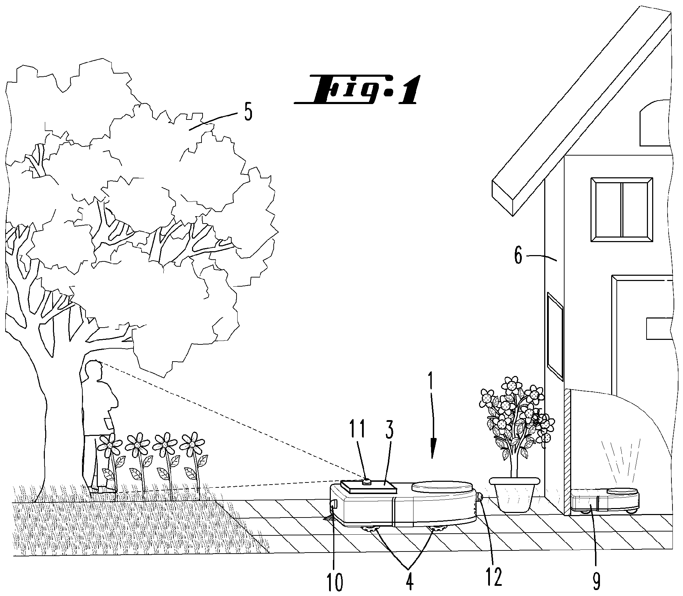

Das in Figur 1 dargestellte Fahrzeug 1 ist ein autonomes Outdoor-Gerät. Es wird von einem Akkumulator angetrieben und besitzt ein von einem Elektromotor angetriebenes Fahrwerk 4, mit dem das Fahrzeug 1 autonom verfahrbar ist. Zur autonomen Verfahrbarkeit des Fahrzeuges sind Navigationssensoren 10 vorgesehen, die mit einer im Fahrzeug 1 angeordneten Steuerungseinrichtung zusammenwirken. Bei der Steuerungseinrichtung handelt es sich um einen programmgesteuerten Mikrokontroller mit Speichermitteln und anderweitiger Peripherie. In den Speichermitteln ist eine Kartografie des Geländes abgelegt, in der Bäume, Pflanzen, Gebäude und anderweitige Hindernisse abgespeichert sind. Mit Hilfe der Navigationssensorik 10 und der Kartografie kann das Fahrzeug 1 selbsttätig auf dem Gelände im Außenbereich Überwachungsfahrten durchführen oder vorgegebene Orte aufsuchen, an denen eine Pflegearbeit mit einem Arbeitsgerät vorgenommen werden kann.

Es können ein oder mehrere Arbeitsmodule 8 vorgesehen sein, die jeweils ein Werkzeug 8' tragen. Bei den Werkzeugen 8' kann es sich um Schnittwerkzeuge, Bewässerungswerkzeuge, Grabwerkzeuge oder anderweitige Werkzeuge handeln, die bei der Gartenarbeit verwendet werden. Während bestimmter Zeiten, insbesondere tagsüber, wird das Fahrzeug 1 als autonom arbeitendes Gartenbearbeitungsgerät eingesetzt und trägt auf einem Modulträger 2 eines von vorzugsweise mehreren Arbeitsmodulen 8 mit einem arbeitsmodulspezifischen Werkzeug 8'.

Es ist eine Basisstation 7 vorgesehen, an der die Arbeitsmodule 8 und ein Überwachungsmodul 3 gelagert werden können. An der Basisstation 7 kann der Akkumulator des Fahrzeugs 1 auch mit elektrischer Energie versorgt werden.

Das Fahrzeug 1 ist durch Tausch des Arbeitsmoduls 8 gegen das Überwachungsmodul 3 in ein Überwachungsgerät wandelbar, welches autark Überwachungsfahrten auf dem Gelände vornehmen kann. Hierzu wird manuell vom Benutzer das Arbeitsmodul 8 gegen ein Überwachungsmodul 3 ausgetauscht. Der Austausch kann auch automatisiert erfolgen, bspw. mit an der Basisstation 7 angeordneten Greifern oder anderweitigen Hilfsmitteln. Das Fahrzeug 1 kann aber auch permanent mit einem Überwachungsmodul 3 ausgestattet sein.

Das Überwachungsmodul 3 besitzt eine Überwachungssensorik, die Überwachungssensoren 11 aufweist. Mit den Überwachungssensoren 11 können Umgebungszustände erfasst werden. Beispielsweise kann ein Überwachungssensor 11 eine Kamera sein. Ein Überwachungssensor 11 kann ein Ultraschallsensor oder ein Infrarotsensor sein. Ferner kann der Überwachungssensor 11 auch ein Abstandssensor sein, bspw. können Abstände durch Radar ermittelt werden.

Das Überwachungsmodul 3 und die im Überwachungsmodul 3 integrierte Bildauswerteeinrichtung oder Sensorsignal-Auswerteeinrichtung ist in der Lage, die von den Überwachungssensoren 11 erfassten Sensordaten dahingehend auszuwerten, dass gespeichert wird, an welchen Orten feststehende Objekte vorhanden sind und welche geometrische Gestalt diese Objekte besitzen. Bei einer Vielzahl von Überwachungsfahrten werden diese Daten verfeinert. Es kann auch erkannt werden, in welchem Bereich sich die Objekte in zulässiger Weise bewegen bzw. verformen können. Hierdurch kann sichergestellt werden, dass bei Wind und sich durch Wind bewegte Pflanzen keine Fehlalarme ausgelöst werden.

Das Überwachungsmodul 3 kann darüber hinaus auch erkennen, ob ein Objekt ein bewegliches Objekt ist, bspw. ein Tier oder eine Person. Es erfasst die Größe des Objektes und erfasst die sich ändernde Position des Objektes. Anhand der Größe des Objektes kann das Überwachungsmodul 3 auch feststellen, ob es sich um einen Eindringling handeln kann. Mittels eines IR-Sensors kann festgestellt werden, ob das Objekt Wärme ausstrahlt. Es ist insbesondere die Verwendung einer Wärmebildkamera vorgesehen.

Die von den Überwachungssensoren 11 gewonnenen Sensordaten werden sowohl qualitativ als auch quantitativ dahingehend analysiert, ob es sich um "übliche" Ereignisse handelt oder ob es sich um "sicherheitsrelevante" Ereignisse handelt. Werden die Sensordaten dahingehend ausgewertet, dass ein "sicherheitsrelevantes" Ereignis vorliegt, wird ein Alarm abgegeben.

Dies erfolgt über eine Kommunikationseinrichtung 12, die mit der Basisstation 7 zusammenwirken kann. Die Kommunikationseinrichtung 12 kann aber auch mit einem Überwachungsgerät zusammenwirken, welches im Inneren eines Gebäudes 6 angeordnet ist. Bei einem derartigen zweiten Überwachungsgerät 9 kann es sich ebenfalls um ein Arbeitsgerät handeln, bspw. um ein solches, wie es in der EP 2 423 893 B1 beschrieben wird, weshalb der Inhalt dieser Schrift vollinhaltlich mit in den Offenbarungsgehalt dieser Anmeldung einbezogen wird.

Das Überwachungsmodul 3 kann Gestaltungsdaten, die die räumliche Gestalt eines Objektes wiedergeben, erfassen und an das im Inneren des Gebäudes 6 angeordnete Überwachungsgerät 9 weitergeben. Das im Inneren des Gebäudes 6 arbeitende Überwachungsgerät 9 ist somit in der Lage, das Objekt, sofern es sich dem Gebäude 6 nähert, anhand übereinstimmender Gestaltungsmerkmale zu identifizieren. Eine im Außenbereich begonnene Überwachung kann somit vom Außenbereich in den Innenbereich verlagert werden. Auch eine umgekehrte Verlagerung des Überwachungsfokus vom Innenbereich in den Außenbereich ist möglich, indem das im Inneren des Gebäudes 6 arbeitende Überwachungsgerät 9 Gestaltungsangaben an das im Außenbereich arbeitende Überwachungsmodul 3 über die Kommunikationseinrichtung 12 übermittelt. Bei der Kommunikationseinrichtung 12 kann es sich um eine WLAN-Verbindung, eine Bluetooth-Verbindung oder eine andere geeignete Datenübertragungsstrecke handeln.

### Liste der Bezugszeichen

- 1: Fahrzeug
- 2: Modulträger
- 3: Überwachungsmodul
- 4: Fahrwerk
- 5: Pflanze
- 6: Gebäude
- 7: Basisstation
- 8: Arbeitsmodul
- 8': Werkzeug
- 9: Arbeitsgerät
- 10: Sensorik
- 11: Überwachungssensor
- 12: Kommunikationseinrichtung

## Patentansprüche

1. System, bestehend aus einem Fahrzeug (1), das selbsttätig im Außenbereich verfahrbar ist und ein von einer Steuereinrichtung gesteuertes Fahrwerk (4) aufweist, wobei die Steuereinrichtung von Sensoren einer Sensorik (10) gewonnene Steuerdaten und ggf. eine in einem Speicherelement gespeicherte Kartografie verwendet, und einer Überwachungssensoren aufweisenden Überwachungseinrichtung, **dadurch gekennzeichnet, dass** die Überwachungseinrichtung von einem Überwachungsmodul (3) zur Detektion von unbefugtem Eindringen eines Objektes und/oder einer Person auf einem zu überwachenden Gelände und Auslösen eines Alarms ausgebildet ist, mit dem das Fahrzeug (1) wahlweise bestückbar oder nicht bestückbar ist, wobei das Fahrzeug (1) anstelle des Überwachungsmoduls (3) oder zusätzlich mit einem Arbeitsmodul (8) bestückbar ist zur Durchführung einer von der Überwachungstätigkeit verschiedenen Tätigkeit, nämlich einer Reinigungs- oder Pflegetätigkeit, und wobei das Fahrzeug (1) einen Modulträger (2) aufweist zur wahlweisen Aufnahme des Überwachungsmoduls (3) oder des Arbeitsmoduls (8), so dass das Fahrzeug (1) durch Tausch des Arbeitsmoduls (8) gegen das Überwachungsmodul (3) in ein Überwachungsgerät wandelbar ist.

2. System nach Anspruch 1, **gekennzeichnet durch** eine Kommunikationseinrichtung (12) zum Datenaustausch mit insbesondere einer Basisstation (7) und/oder einem zweiten Fahrzeug (9), welches insbesondere ein im Inneren eines Gebäudes (6) eingesetztes Arbeitsgerät ist.

3. System nach einem der vorhergehenden Ansprüche, **dadurch gekennzeichnet, dass** das zweite Fahrzeug (9) ein von einer Steuereinrichtung gesteuertes Fahrwerk aufweist, wobei die Steuereinrichtung von Sensoren einer Sensorik gewonnene Steuerdaten und ggf. eine in einem Speicherelement gespeicherte Kartografie verwendet.

4. Verfahren zum Betrieb eines Fahrzeuges gemäß einem der vorhergehenden Ansprüche zur Überwachung eines Außenbereichs, **dadurch gekennzeichnet, dass** für einen Überwachungszeitraum das Fahrzeug (1) mit dem Überwachungsmodul (3) bestückt wird und für einen Arbeitszeitraum mit einem ein Werkzeug (8') aufweisenden Arbeitsmodul (8) ausgestattet ist.

5. Verfahren nach Anspruch 4, **dadurch gekennzeichnet, dass** das Fahrzeug (1) während einer Überwachungsfahrt durch einen Außenbereich fortwährend aktuelle Umgebungseigenschaften erfasst und diese in einem Speicher abspeichert und die aktuellen Umgebungseigenschaften mit einer in zumindest einer vorherigen Überwachungsfahrt erfassten und abgespeicherten Umgebungseigenschaft vergleicht und sowohl quantitativ als auch qualitativ eine Abweichung der aktuellen Umgebungseigenschaften von den abgespeicherten Umgebungseigenschaften ermittelt und diese Abweichungen bewertet, um einen Alarm abzugeben.

6. Verfahren nach einem der Ansprüche 4 oder 5, **dadurch gekennzeichnet, dass** das Überwachungsmodul (3) in der Lage ist, die räumliche Veränderung von Objekten (5) zu erfassen, wobei die räumliche Struktur des Objektes charakterisierende Daten an eine Überwachungseinrichtung weitergegeben werden, die im Inneren eines Gebäudes angeordnet ist.

## Claims

1. System consisting of a vehicle (1) which is independently mobile in the outdoor area and has a running gear (4) that is controlled by a controller, wherein the controller uses control data acquired by sensors of a sensor system (10) and optionally a mapping function stored in a memory element, and a surveillance device equipped with surveillance sensors, **characterized in that** the surveillance device consists of a surveillance module (3), in order to detect unauthorised entry of an object and/or of a person on a site to be monitored and trigger an alarm, with which the vehicle (1) may be equipped or not equipped according to choice, wherein the vehicle (1) can be equipped with a work module (8) instead of the surveillance module (3) or additionally thereto to carry out an activity that differs from the surveillance activity, particularly a cleaning or tending activity and wherein the vehicle (1) has a module carrier (2) for optional accommodation of the surveillance module (3) or the work module (8), so that the vehicle (1) can be converted into a monitoring device by exchanging the work module (8) for the monitoring module (3).

2. System according to claim 1, **characterized by** a communication device (12) for the exchange of data particularly with a base station (7) and/or a second vehicle (9), which is particularly a work unit used in the interior of a building (6).

3. System according to any one of the preceding claims, **characterized in that** the second vehicle (9) has a running gear controlled by a controller, wherein the controller uses control data acquired by sensors of a sensor system and optionally a mapping function stored in a memory element.

4. Method for operating a vehicle according to any one of the preceding claims for assuring surveillance of an outdoor area, **characterized in that** for a surveillance period the vehicle (1) is equipped with the surveillance module (3) and for a working period it is equipped with a work module (8) having a tool (8').

5. Method according to Claim 4, **characterized in that** the vehicle (1) captures current features of the surroundings continuously during a surveillance pass through an outdoor area and stores these in a memory and compares the current features of the surroundings with a captured and stored record of the features of the surroundings acquired in at least one previous surveillance pass, and analyses a deviation between the current features of the surroundings and the stored features of the surroundings both quantitatively and qualitatively, and evaluates said deviation in order to issue an alarm.

6. Method according to one of the Claims 4 or 5, **characterized in that** the surveillance module (3) is capable of capturing the spatial change of objects (5), wherein the data characterizing the spatial structure of the object is forwarded to a surveillance device which is arranged in the interior of a building.

## Revendications

1. Système composé d'un véhicule (1) pouvant se déplacer automatiquement à l'extérieur et comprenant un système de déplacement (4) commandé par un dispositif de commande qui utilise des données de commande obtenues à partir de capteurs d'un système de capteurs (10) et, le cas échéant, une cartographie enregistrée dans un élément de mémoire, et d'un dispositif de surveillance comportant des capteurs de surveillance, **caractérisé en ce que** le dispositif de surveillance est formé par un module de surveillance (3) pour détecter l'intrusion non autorisée d'un objet et/ou d'une personne sur un terrain à surveiller et déclencher une alarme, avec lequel le véhicule (1) peut être équipé ou non au choix, dans lequel le véhicule (1) peut être équipé d'un module de travail (8) à la place du module de surveillance (3) ou en plus pour l'exécution d'une activité différente de l'activité de surveillance, à savoir une activité de nettoyage ou d'entretien, et dans lequel le véhicule (1) présente un support de module (2) pour recevoir au choix le module de surveillance (3) ou le module de travail (8) de sorte que le véhicule (1) peut être transformé en un dispositif de surveillance en remplaçant le module de travail (8) par le module de surveillance (3).

2. Système selon la revendication 1, **caractérisé par** un dispositif de communication (12) pour l'échange de données avec, en particulier, une station de base (7) et/ou un deuxième véhicule (9) qui est, en particulier, un dispositif de travail utilisé à l'intérieur d'un bâtiment (6).

3. Système selon l'une des revendications précédentes, **caractérisé en ce que** le deuxième véhicule (9) comprend un système de déplacement commandé par un dispositif de commande, dans lequel le dispositif de commande utilise des données de commande obtenues à partir de capteurs d'un système de capteurs et, le cas échéant, une cartographie stockée dans un élément de mémoire.

4. Procédé de fonctionnement d'un véhicule selon l'une des revendications précédentes pour la surveillance d'une zone extérieure, **caractérisé en ce que** le véhicule (1) est équipé, pendant une période de surveillance, du module de surveillance (3) et, pendant une période de travail, d'un module de travail (8) comportant un outil (8').

5. Procédé selon la revendication 4, **caractérisé en ce que** pendant un trajet de surveillance à travers une zone extérieure, le véhicule (1) détecte continuellement des caractéristiques environnementales actuelles et les stocke dans une mémoire et compare les caractéristiques environnementales actuelles avec une caractéristique environnementale détectée et stockée lors d'au moins un trajet de surveillance précédent et détermine à la fois quantitativement et qualitativement un écart des caractéristiques environnementales actuelles par rapport aux caractéristiques environnementales stockées et évalue ces écarts pour déclencher une alarme.

6. Procédé selon l'une des revendications 4 ou 5, **caractérisé en ce que** le module de surveillance (3) est capable de détecter le changement spatial d'objets (5), dans lequel les données caractérisant la structure spatiale de l'objet sont transmises à un dispositif de surveillance agencé à l'intérieur d'un bâtiment.
